# EUROPÄISCHE PATENTSCHRIFT

(11) **EP 1 916 509 B1**
(45) Veröffentlichungstag und Bekanntmachung des Hinweises auf die Patenterteilung: **28.12.2011**
(21) Anmeldenummer: 06022206.4
(22) Anmeldetag: 24.10.2006
(51) Int. Cl.: G01M 3/18, F16J 15/32, F16J 15/34

(54) **Dichtungsanordnung mit Leckerfassungsvorrichtung**
Sealing arrangement with a leak detecting device
Arrangement d'étanchéité avec un dispositif de détection de fuites

(43) Veröffentlichungstag der Anmeldung: 30.04.2008
(73) Patentinhaber: Carl Freudenberg KG, 69469 Weinheim (DE)
(72) Erfinder: Schreiner, Marcel, 68259 Mannheim (DE); Schreiner, Peter, 67117 Limburgerhof (DE); Röhner, Gerhard, 69502 Hemsbach (DE)

(56) Entgegenhaltungen:
- DE-A- 2 756 080
- DE-A1- 10 314 924
- GB-A- 2 219 475

## Beschreibung

### Technisches Gebiet

Die Erfindung betrifft eine Dichtungsanordnung zur Abdichtung eines abzudichtenden ersten und eines abzudichtenden zweiten Raumes gegeneinander, wobei das abzudichtende flüssige erste Medium im abzudichtenden ersten Raum mit einem höheren Druck beaufschlagt ist, als das abzudichtende flüssige zweite Medium im abzudichtenden zweiten Raum, umfassend ein abzudichtendes erstes Maschinenelement, das in beiden abzudichtenden Räumen angeordnet ist, wobei das erste Medium im ersten Raum durch eine erste Dichtung und das zweite Medium im zweiten Raum durch einen Radialwellendichtring abgedichtet ist, wobei die erste Dichtung und der Radialwellendichtring eine abzudichtende Oberfläche des ersten Maschinenelements dichtend umschließen, wobei axial zwischen den einander benachbart zugewandten Stirnseiten von erster Dichtung und Radialwellendichtring ein weiterer Dichtring angeordnet ist.

### Stand der Technik

Eine solche Dichtungsanordnung ist aus der DE 27 56 080 A1 bekannt. Die beiden flüssigen Medien, die hier gegeneinander abgedichtet werden, sind Seewasser und Schmieröl. Das Seewasser hat dabei einen höheren Druck als das Schmieröl. Sowohl die erste Dichtung als auch der Radialwellendichtring bestehen bei der vorbekannten Dichtungsanordnung jeweils aus einem geeigneten Elastomermaterial, wie Gummi oder synthetischem Kautschuk. Die erste Dichtung ist dabei als ringförmige Abdichtpackung ausgebildet. Zwischen der ersten Dichtung und dem Radialwellendichtring ist der weitere Dichtring angeordnet, wobei zwischen der ersten Dichtung und dem weiteren Dichtring eine Leerkammer angeordnet ist, in der sich Leckage in Form von Seewasser oder Schmieröl sammeln kann. Die Leerkammer weist einen Auslass auf, durch den die gesammelte Leckage beispielsweise in einen Auffangbehälter im Inneren eines Schiffs geleitet werden kann. Der weitere Dichtring dient dazu, Wasser aus der Leerkammer am Eindringen in die Ölkammer, die sich auf der vom weiteren Dichtring axial abgewandten Seite des Radialwellendichtrings befindet, zu hindern. Für den Fall, dass der weitere Dichtring verschlissen / defekt ist, kann es dennoch zu einem Durchtritt von Seewasser in Richtung Ölkammer kommen, ohne dass dies zunächst bemerkt wird; ein Sensor, der eine Leckage aus der Leerkammer am weiteren Dichtring vorbei in Richtung Radialwellendichtring detektiert, ist nicht vorhanden.

Eine weitere Dichtungsanordnung ist aus der DE 103 14 923 A1 bekannt. Die Dichtungsanordnung ist zur Abdichtung eines abzudichtenden Raums vorgesehen, in dem ein abzudichtendes Medium angeordnet ist, wobei die Dichtungsanordnung einen Dichtring aufweist, der eine abzudichtende Oberfläche eines abzudichtenden ersten Maschinenelements dichtend umschließt.

Das erste Maschinenelement ist bei der vorbekannten Dichtungsanordnung als Welle ausgebildet und der Dichtring weist eine Einrichtung zur Detektierung einer Leckage auf. Diese Einrichtung umfasst dazu einen Sensor und ein Leckagereservoir zur Aufnahme der Leckage, das durch den Sensor überwacht wird. Das Leckagereservoir besteht aus einem saug- und/oder quellfähigen Material, beispielsweise aus einem Vliesstoff.

Die Sensierung der Leckage kann beispielsweise optisch erfolgen oder über die Änderung des dielektrischen Verhaltens des Leckagereservoirs. Dazu ist das Leckagereservoir zwischen zwei Kondensatorplatten angeordnet, die beispielsweise aus den Tragringen von Dichtring und Einrichtung zur Erfassung der Leckage oder beidseitig auf dem Leckagereservoir angebrachten Beschichtungen aus leitfähigem Material bestehen. Durch Aufnahme von Leckage ändert sich das dielektrische Verhalten des Leckagereservoirs, was durch den Sensor erfasst wird. Eine Trennung von zwei Medien, von denen eines unter einem höheren Druck steht, als das Andere, ist mit der vorbekannten Dichtungsanordnung nicht möglich.

Zur Abdichtung abzudichtender flüssiger Medien unter Atmosphärendruck hat sich allgemein der Einsatz von Radialwellendichtringen bewährt. Gleitringdichtungen kommen demgegenüber zur Abdichtung von flüssigen Medien zur Anwendung, die unter hohem Druck stehen.

Aus der GB-A-2 219 475 ist eine Dichtungsanordnung bekannt, die aus einem Dichtring aus elastomerem Werkstoff besteht, der ein Wälzlager abdichtet. Dem Dichtring ist eine Labyrinthdichtung vorgeschaltet.

### Darstellung der Erfindung

Der Erfindung liegt die Aufgabe zugrunde, eine Dichtungsanordnung derart weiterzuentwickein, dass zwei mit jeweils einem flüssigen Medium gefüllte, unter unterschiedlich hohem Druck stehende abzudichtende Räume zuverlässig gegeneinander abgedichtet werden können. Insbesondere soll vermieden werden, dass das unter einem höheren Druck stehende Medium in den mit vergleichsweise geringerem Druck beaufschlagten Raum eindringt und sich mit dem Medium in diesem Raum vermischt. Außerdem soll eine Leckage von abzudichtendem Medium aus dem abzudichtenden Raum mit vergleichsweise höherem Druck detektiert werden können.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist eine Dichtungsanordnung vorgesehen, zur Abdichtung eines abzudichtenden ersten und eines abzudichtenden zweiten Raums gegeneinander, wobei das abzudichtende flüssige erste Medium im abzudichtenden ersten Raum mit einem höheren Druck beaufschlagt ist, als das abzudichtende flüssige zweite Medium im abzudichtenden zweiten Raum, umfassend ein abzudichtendes erstes Maschinenelement, das in beiden abzudichtenden Räumen angeordnet ist, wobei das erste Medium im ersten Raum durch eine erste Dichtung und das zweite Medium im zweiten Raum durch einen Radialwellendichtring abgedichtet ist, wobei die erste Dichtung und der Radialwellendichtring eine abzudichtende Oberfläche des ersten Maschinenelements dichtend umschließen, wobei axial zwischen den einander benachbart zugewandten Stirnseiten von erster Dichtung und Radialwellendichtring ein weiterer Dichtring angeordnet ist, wobei die erste Dichtung als Gleitringdichtung ausgebildet ist und wobei zur Detektierung einer Leckage der Gleitringdichtung und / oder des weiteren Dichtrings ein Leckagesensor und ein Leckagereservoir axial zwischen dem weiteren Dichtring und dem Radialwellendichtring angeordnet sind.

Durch die zuvor beschriebene Dichtungsanordnung ist eine zuverlässige Abdichtung auch dann gewährleistet, wenn die beiden abzudichtenden Medien in den gegeneinander abzudichtenden Räumen mit vergleichsweise sehr stark voneinander abweichenden Drücken beaufschlagt sind. Beispielsweise kann es sich bei dem ersten Medium um unter Hochdruck stehendes Kühlmittel und beim zweiten Medium um unter Atmosphärendruck stehendes Getriebeöl handeln. Zur Abdichtung von Öl unter Atmosphärendruck hat sich der Einsatz von Radialwellendichtringen bewährt. Dem gegenüber sind Gleitringdichtungen besonders gut geeignet, um unter hohem Druck stehende flüssige Medien abzudichten.
Bisher wurden Radialwellendichtringe und Gleitringdichtungen zusammen in einer Dichtungsanordnung nicht verwendet. Dies ist konstruktionsbedingt. Während die Gleitringdichtung als berührungslose Dichtung im Betrieb stets eine geringe Leckage hat, dichtet der Radialwellendichtring dicht ab, insbesondere dann, wenn er, gemäß einer vorteilhaften Ausgestaltung, zumindest eine Dichtlippe mit einem Rückförderdrall zur Förderung des abzudichtenden Mediums zurück in den abzudichtenden Raum aufweist. In einem solchen Fall ist er absolut dicht Würde die konstruktionsbedingte Leckage von erstem Medium aus der Gleitringdichtung den Radialwellendichtring auf der dem abzudichtenden zweiten Raum axial abgewandten Seite beaufschlagen, würde dies zu einer unerwünschten Förderung der Leckage von erstem Medium in den abzudichtenden zweiten Raum führen und somit zu einer unerwünschten Vermischung von erstem und zweitem Medium. Speziell dann, wenn es sich um Kühlmittel einerseits und Getriebeöl andererseits handelt, gilt es die Vermischung der beiden abzudichtenden Medien miteinander in jedem Fall zu verhindern, um einen Ausfall der Maschine, in der die Dichtungsanordnung montiert ist, zu verhindern.

Bei der erfindungsgemäßen Dichtungsanordnung ist von Vorteil, dass die konstruktionsbedingte Leckage der Gleitringdichtung im Normalfall durch den weiteren Dichtring vom Radialwellendichtring ferngehalten wird. Passiert demgegenüber die Leckage der Gleitringdichtung den weiteren Dichtring in Richtung Radialwellendichtring, nimmt das Leckagereservoir die Leckage auf. Der Leckagesensor detektiert die Leckage im Leckagereservoir und bringt diese optisch und/oder akustisch zur Anzeige. Erzeugt wird in einer elektronischen Auswerteschaltung ein elektrisches Signal. Die Gleitringdichtung kann dann beispielsweise ausgewechselt werden, ohne dass es zuvor zu einer schädlichen Vermischung der gegeneinander abzudichtenden Medien kommt. Ein Ansaugen des abzudichtenden ersten Mediums durch den Radialwellendichtring und die Förderung entlang des Rückförderdralls in den abzudichtenden zweiten Raum ist dadurch ausgeschlossen.

Das erste Medium kann durch Kühlmittel, das zweite Medium durch Öl gebildet sein. Das Kühlmittel kann in einigen Anwendungsfällen unter einem erhöhten Druck stehen.
Dem gegenüber kann das Öl unter Atmosphärendruck stehen.

Der weitere Dichtring ist bevorzugt als berührungslose Labyrinthdichtung ausgebildet. Hierbei ist von Vorteil, dass die Verlustleistung der Dichtungsanordnung während ihres Betriebs durch Verwendung des weiteren Dichtrings nicht erhöht wird; die Labyrinthdichtung arbeitet außerdem praktisch verschleißfrei.

Das Leckagereservoir kann durch eine Vliesstoffscheibe gebildet sein, die im Wesentlichen konzentrisch zur abzudichtenden Oberfläche des ersten Maschinenelements angeordnet ist. Vliesstoffscheiben sind in unterschiedlichen Größen und an den Anwendungsfall angepassten Materialien einfach herstellbar und kostengünstig verfügbar.

Das erste Maschinenelement kann als abzudichtende Welle ausgebildet sein, wobei das erste Maschinenelement von einem als Gehäuse ausgebildeten zweiten Maschinenelement umschlossen ist.

Die erfindungsgemäße Dichtungsanordnung kann in Wasserretardern zur Anwendung gelangen. Zur Ausgestaltung und zur Funktion eines Wasserretarders, insbesondere zur erfindungsgemäßen Dichtungsanordnung in Wasserretardem, wird Folgendes ausgeführt:
Im Gegensatz zu gewöhnlichen Retardem, arbeiten Wasserretarder mit dem Betriebsmedium "Kühlwasser". Der Wasserretarter ist somit in den Kühlkreislauf integriert und direkt mit der Kurbelwelle des Dieselmotors verbunden. Der über die Kurbelwelle angetriebene Rotor des Wasserretarders beschleunigt das Kühlmittel, das im Stator verzögert wird. Dadurch wird auch der Rotor verzögert und das Fahrzeug abgebremst. Die dabei anfallende Bremswärme wird direkt über das Fahrzeugkühlsystem abgeführt.
Die Besonderheit in diesem System ist die unmittelbare Nachbarschaft von unter hohem Druck stehendem Kühlwasser des Kühlkreislaufs und unter Atmosphärendruck stehendem Getriebeöl der Kurbelwelle, wobei Kühlwasser und Getriebeöl zuverlässig gegeneinander abgedichtet werden müssen.

Zur Vereinfachung der Montage der Dichtungsanordnung kann es vorgesehen sein, dass der Radialwellendichtring, der weitere Dichtring, der Leckagesensor und das Leckagereservoir eine vormontierbare erste Einheit bilden.

Darüber hinaus kann es vorgesehen sein, dass die Gleitringdichtung, der weitere Dichtring, der Leckagesensor, das Leckagereservoir, der Radialwellendichtring und das zweite Maschinenelement eine vormontierbare zweite Einheit bilden. Durch die Zusammenfassung unterschiedlicher Maschinenelemente in Einheiten wird die Montage vereinfacht und die Gefahr von Montagefehlern auf ein Minimum begrenzt.

Durch die erfindungsgemäße Dichtungsanordnung können eine Gleitringdichtung mit kontruktionsbedingter Leckage und ein Radialwellendichtring gemeinsam in einem System betrieben werden. Insbesondere besteht die. Möglichkeit, unter niedrigem Druck stehendes Getriebeöl zuverlässig von unter Hochdruck stehendem Kühlmittel dauerhaft zu trennen.

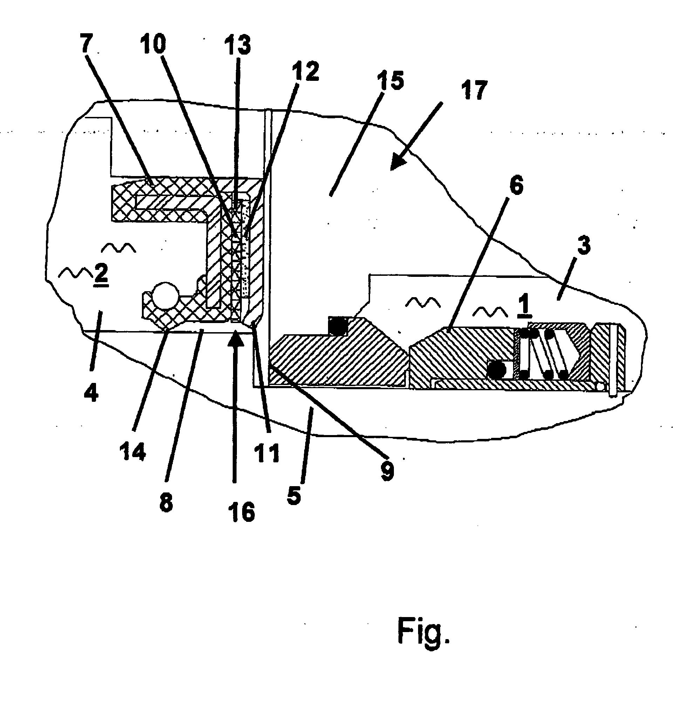

### Kurzbeschreibung der Zeichnung

Ein Ausführungsbeispiel der erfindungsgemäßen Dichtungsanordnung wird nachfolgend anhand der schematisch dargestellten Figur näher beschrieben.

### Ausführung der Erfindung

In der Figur ist ein Ausschnitt aus einem Wasserretarder gezeigt. Der Ausschnitt zeigt ein Ausführungsbeispiel der erfindungsgemäßen Dichtungsanordnung. Der abzudichtende erste Raum 1 und der abzudichtende zweite Raum 2 werden hier gegeneinander abgedichtet, wobei innerhalb des abzudichtenden ersten Raums 1 das abzudichtende erste Medium 3 angeordnet ist. Dabei handelt es sich um ein unter Hochdruck stehendes Kühlmittel. Im abzudichtenden zweiten Raum 2 ist demgegenüber das zweite abzudichtende Medium 4 angeordnet. Innerhalb des zweiten Raums 2 befindet sich Getriebeöl unter Atmosphärendruck.
Das abzudichtende erste Maschinenelement 5 ist als abzudichtende Welle ausgebildet und weist eine abzudichtende Oberfläche 8 auf, wobei das erste Maschinenelement 5 von einem als Gehäuse ausgebildeten zweiten Maschinenelement 15 umschlossen ist.

Um gute Gebrauchseigenschaften der Dichtungsanordnung während einer langen Gebrauchsdauer zu gewährleisten, ist von entscheidender Wichtigkeit, dass die beiden abzudichtenden Räume 1, 2 jeweils von geeigneten Dichtungen abgedichtet werden. Das erste Medium 3 im ersten Raum 1 wird wegen des relativ höheren Drucks durch eine Gleitringdichtung 6 abgedichtet, während das zweite Medium 4 im zweiten Raum 2, wegen des relativ niedrigeren Drucks, durch einen Radiaiwellendichtring 7 abgedichtet ist. Die Dichtungen 6, 7 sind also an den jeweiligen Anwendungsfall angepasst, insbesondere an die Druckverhältnisse in den jeweils abzudichtenden Räumen 1, 2. Dadurch ist die Dichtungsanordnung kostengünstig herstellbar.

Axial zwischen den einander benachbart zugewandten Stirnseiten 9, 10 von Gleitringdichtung 6 und Radialwellendichtring 7 ist der weitere Dichtring 11 angeordnet, der in diesem Ausführungsbeispiel als berührungslose Labyrinthdichtung ausgebildet ist. Zur Detektierung der kontruktionsbedingten Leckage der Gleitringdichtung 6 und/oder des weiteren Dichtrings 11 ist der Leckagesensor 12 vorgesehen, der im Leckagereservoir 13 befindliche Leckage detektiert, wobei der Leckagesensor 12 und das Leckagereservoir 13 axial zwischen dem weiteren Dichtring 11 und dem Radialwellendichtring 7 angeordnet sind.

Zwecks einfacher Herstellung und Montage und um Montagefehler auf ein Minimum zu reduzieren, bilden der Radialwellendichtring 7, der weitere Dichtring 11 und der Leckagesensor 12 sowie das Leckagereservoir 13 eine vormontierbare erste Einheit 16.

Zusätzlich können noch die Gleitringdichtung 6 und das zweite Maschinenelement 15 zur ersten Einheit 16 hinzugenommen werden, so dass sich dadurch eine vormontierbare zweite Einheit 17 ergibt.
Das Leckagereservoir 13 ist durch eine Vliesstoffscheibe gebildet, die im Wesentlichen konzentrisch zur Oberfläche 8 des ersten Maschinenelements 5 angeordnet ist.

Bei der erfindungsgemäßen Dichtungsanordnung sind die Gleitringdichtung 6 und der Radialwellendichtring 7 in einem zuverlässigen System vereint. Ein leckagebedingter Übertritt des abzudichtenden ersten Mediums 3 in den abzudichtenden zweiten Raum 2 und dadurch eine Vermischung mit dem abzudichtenden zweiten Medium 4 ist durch den weiteren Dichtring 11, den Leckagesensor 12 und das Leckagereservoir 13 sicher ausgeschlossen. Der weitere Dichtring 11 hält konstruktionsbedingte Leckage der Gleitringdichtung 6 zuverlässig von der Stirnseite 10 des Radialwellendichtrings 7 fern. Für den Fall, dass die Gleitringdichtung 6 einen Defekt aufweist und die Leckage dadurch ungewöhnlich hoch ist, wird die Leckage im Leckagereservoir 13 aufgenommen und durch den Leckagesensor 12 detektiert, bevor die Leckage die dem abzudichtenden zweiten Raum 2 axial abgewandte Seite des Radialwellendichtrings 7 berührt und durch den Rückförderdrall der Dichtlippe 14 in den abzudichtenden zweiten Raum 2 gelangt.

## Patentansprüche

1. Dichtungsanordnung zur Abdichtung eines abzudichtenden ersten (1) und eines abzudichtenden zweiten Raums (2) gegeneinander, wobei das abzudichtende flüssige erste Medium (3) im abzudichtenden ersten Raum (1) mit einem höheren Druck beaufschlagt ist, als das abzudichtende flüssige zweite Medium (4) im abzudichtenden zweiten Raum (2), umfassend ein abzudichtendes erstes Maschinenelement (5), das in beiden abzudichtenden Räumen (1, 2) angeordnet ist, wobei das erste Medium (3) im ersten Raum (1) durch eine erste Dichtung und das zweite Medium (4) im zweiten Raum (2) durch einen Radialwellendichtring (7) abgedichtet ist, wobei die erste Dichtung und der Radialwellendichtring (7) eine abzudichtende Oberfläche (8) des ersten Maschinenelements (5) dichtend umschließen, wobei axial zwischen den einander benachbart zugewandten Stirnseiten (9, 10) von erster Dichtung und Radialwellendichtring (7) ein weiterer Dichtring (11) angeordnet ist, **dadurch gekennzeichnet, dass** die erste Dichtung als Gleitringdichtung (6) ausgebildet ist, dass zur Detektierung einer Leckage der Gleitringdichtung (6) und/oder des weiteren Dichtrings (11) ein Leckagesensor (12) und ein Leckagereservoir (13) axial zwischen dem weiteren Dichtring (11) und dem Radialwellendichtring (7) angeordnet sind.

2. Dichtungsanordnung nach Anspruch 1, **dadurch gekennzeichnet, dass** der Radialwellendichtring (7) zumindest eine Dichtlippe (14) mit einem Rückförderdrall zur Förderung des abzudichtenden zweiten Mediums (4) zurück in den abzudichtenden zweiten Raum (2) aufweist.

3. Dichtungsanordnung nach einem der Ansprüche 1 oder 2, **dadurch gekennzeichnet, dass** das erste Medium (3) durch Kühlmittel gebildet ist.

4. Dichtungsanordnung nach einem der Ansprüche 1 oder 2, **dadurch gekennzeichnet, dass** das zweite Medium (4) durch Öl gebildet ist.

5. Dichtungsanordnung nach einem der Ansprüche 1 bis 4, **dadurch gekennzeichnet, dass** das zweite Medium (4) mit atmosphärischem Druck beaufschlagt ist.

6. Dichtungsanordnung nach einem der Ansprüche 1 bis 5, **dadurch gekennzeichnet, dass** der weitere Dichtring (11) als berührungslose Labyrinthdichtung ausgebildet ist.

7. Dichtungsanordnung nach einem der Ansprüche 1 bis 6, **dadurch gekennzeichnet, dass** das Leckagereservoir (13) durch eine Vliesstoffscheibe gebildet ist, die im Wesentlichen konzentrisch zur abzudichtenden Oberfläche (8) des ersten Maschinenelements (5) angeordnet ist.

8. Dichtungsanordnung nach einem der Ansprüche 1 bis 7, **dadurch gekennzeichnet, dass** das erste Maschinenelement (5) als abzudichtende Welle ausgebildet ist.

9. Dichtungsanordnung nach einem der Ansprüche 1 bis 8, **dadurch gekennzeichnet, dass** das erste Maschinenelement (5) von einem als Gehäuse ausgebildeten zweiten Maschinenelement (15) umschlossen ist.

10. Dichtungsanordnung nach einem der Ansprüche 1 bis 9, **dadurch gekennzeichnet, dass** der Radialwellendichtring (7), der weitere Dichtring (11), der Leckagesensor (12) und das Leckagereservoir (13) eine vormontierbare erste Einheit (16) bilden.

11. Dichtungsanordnung nach einem der Ansprüche 1 bis 10, **dadurch gekennzeichnet, dass** die Gleitringdichtung (6), der weitere Dichtring (11), der Leckagesensor (12), das Leckagereservoir (13), der Radiahnrellendichtring (7) und das zweite Maschinenelement (15) eine vormontierbare zweite Einheit (17) bilden.

## Claims

1. Sealing arrangement for sealing a first space (1) to be sealed and a second space (2) to be sealed with respect to one another, the liquid first medium (3) to be sealed in the first space (1) to be sealed being loaded with a higher pressure than the liquid second medium (4) to be sealed in the second space (2) to be sealed, comprising a first machine element (5) to be sealed which is arranged in both spaces (1, 2) to be sealed, the first medium (3) in the first space (1) being sealed by a first seal and the second medium (4) in the second space (2) being sealed by a radial shaft sealing ring (7), the first seal and the radial shaft sealing ring (7) sealingly enclosing a surface (8) to be sealed of the first machine element (5), a further sealing ring (11) being arranged axially between those end sides (9, 10) of the first seal and the radial shaft sealing ring (7) which face one another adjacently, **characterized in that** the first seal is configured as a slide ring seal (6), and **in that** a leakage sensor (12) and a leakage reservoir (13) are arranged axially between the further sealing ring (11) and the radial shaft sealing ring (7) in order to detect a leakage of the slide ring seal (6) and/or of the further sealing ring (11).

2. Sealing arrangement according to Claim 1, **characterized in that** the radial shaft sealing ring (7) has at least one sealing lip (14) with a return conveying swirl in order to convey the second medium (4) to be sealed back into the second space (2) to be sealed.

3. Sealing arrangement according to either of Claims 1 and 2, **characterized in that** the first medium (3) is formed by coolant.

4. Sealing arrangement according to either of Claims 1 and 2, **characterized in that** the second medium (4) is formed by oil.

5. Sealing arrangement according to one of Claims 1 to 4, **characterized in that** the second medium (4) is loaded with atmospheric pressure.

6. Sealing arrangement according to one of Claims 1 to 5, **characterized in that** the further sealing ring (11) is configured as a contactless labyrinth seal.

7. Sealing arrangement according to one of Claims 1 to 6, **characterized in that** the leakage reservoir (13) is formed by a nonwoven fabric disc which is arranged substantially concentrically with respect to the surface (8) to be sealed of the first machine element (5).

8. Sealing arrangement according to one of Claims 1 to 7, **characterized in that** the first machine element (5) is configured as a shaft to be sealed.

9. Sealing arrangement according to one of Claims 1 to 8, **characterized in that** the first machine element (5) is enclosed by a second machine element (15) which is configured as a housing.

10. Sealing arrangement according to one of Claims 1 to 9, **characterized in that** the radial shaft sealing ring (7), the further sealing ring (11), the leakage sensor (12) and the leakage reservoir (13) form one first unit (16) which can be preassembled.

11. Sealing arrangement according to one of Claims 1 to 10, **characterized in that** the slide ring seal (6), the further sealing ring (11), the leakage sensor (12), the leakage reservoir (13), the radial shaft sealing ring (7) and the second machine element (15) form one second unit (17) which can be preassembled.

## Revendications

1. Agencement d'étanchéité pour l'étanchéité d'un premier espace à étanchéifier (1) et d'un deuxième espace à étanchéifier (2) l'un par rapport à l'autre, le premier milieu fluide (3) à étanchéifier dans le premier espace à étanchéifier (1) étant sollicité avec une pression supérieure au deuxième milieu fluide à étanchéifier (4) dans le deuxième espace à étanchéifier (2), comprenant un premier élément de machine à étanchéifier (5), qui est disposé dans les deux espaces à étanchéifier (1, 2), le premier milieu (3) dans le premier espace (1) étant étanchéifié par un premier joint d'étanchéité et le deuxième milieu (4) dans le deuxième espace (2) étant étanchéifié par une bague d'étanchéité radiale pour arbre (7), le premier joint d'étanchéité et la bague d'étanchéité radiale pour arbre (7) entourant une surface à étanchéifier (8) du premier élément de machine (5) de manière hermétique, une bague d'étanchéité supplémentaire (11) étant disposée axialement entre les côtés frontaux (9, 10) adjacents tournés l'un vers l'autre du premier joint d'étanchéité et de la bague d'étanchéité radiale pour arbre (7), **caractérisé en ce que** le premier joint d'étanchéité est réalisé sous forme de garniture mécanique d'étanchéité (6), et **en ce que** pour détecter une fuite de la garniture mécanique d'étanchéité (6) et/ou de la bague d'étanchéité supplémentaire (11), un détecteur de fuite (12) et un réservoir de fuite (13) sont disposés axialement entre la bague d'étanchéité supplémentaire (11) et bague d'étanchéité radiale pour arbre (7).

2. Agencement d'étanchéité selon la revendication 1, **caractérisé en ce que** la bague d'étanchéité radiale pour arbre (7) présente au moins une lèvre d'étanchéité (14) avec un tourbillon de reflux pour refouler le deuxième milieu à étanchéifier (4) dans le deuxième espace à étanchéifier (2).

3. Agencement d'étanchéité selon l'une quelconque des revendications 1 ou 2, **caractérisé en ce que** le premier milieu (3) est formé par du réfrigérant.

4. Agencement d'étanchéité selon l'une quelconque des revendications 1 ou 2, **caractérisé en ce que** le deuxième milieu (4) est formé par de l'huile.

5. Agencement d'étanchéité selon l'une quelconque des revendications 1 à 4, **caractérisé en ce que** le deuxième milieu (4) est sollicité par une pression atmosphérique.

6. Agencement d'étanchéité selon l'une quelconque des revendications 1 à 5, **caractérisé en ce que** la bague d'étanchéité supplémentaire (11) est réalisée sous forme de joint à labyrinthe sans contact.

7. Agencement d'étanchéité selon l'une quelconque des revendications 1 à 6, **caractérisé en ce que** le réservoir de fuite (13) est formé par un disque en non tissé, qui est disposé sensiblement concentriquement par rapport à la surface à étanchéifier (8) du premier élément de machine (5).

8. Agencement d'étanchéité selon l'une quelconque des revendications 1 à 7, **caractérisé en ce que** le premier élément de machine (5) est réalisé sous forme d'arbre à étanchéifier.

9. Agencement d'étanchéité selon l'une quelconque des revendications 1 à 8, **caractérisé en ce que** le premier élément de machine (5) est entouré par un deuxième élément de machine (15) réalisé sous forme de boitier.

10. Agencement d'étanchéité selon l'une quelconque des revendications 1 à 9, **caractérisé en ce que** la bague d'étanchéité radiale pour arbre (7), la bague d'étanchéité supplémentaire (11), le détecteur de fuite (12) et le réservoir de fuite (13) forment une première unité prémontable (16).

11. Agencement d'étanchéité selon l'une quelconque des revendications 1 à 10, **caractérisé en ce que** la garniture mécanique d'étanchéité (6), la bague d'étanchéité supplémentaire (11), le capteur de fuite (12), le réservoir de fuite (13), la bague d'étanchéité radiale pour arbre (7) et le deuxième élément de machine (15) forment une deuxième unité prémontable (17).
